(19) Europäisches Patentamt
European Patent Office
Office européen des brevets

(11) EP 3 158 092 B1

(12) **FASCICULE DE BREVET EUROPEEN**

(45) Date de publication et mention de la délivrance du brevet:
**14.11.2018 Bulletin 2018/46**

(21) Numéro de dépôt: **15728883.8**

(22) Date de dépôt: **16.06.2015**

(51) Int Cl.:
***C22B 3/26*** (2006.01) ***C22B 34/20*** (2006.01)

(86) Numéro de dépôt international:
**PCT/EP2015/063475**

(87) Numéro de publication internationale:
**WO 2015/193314 (23.12.2015 Gazette 2015/51)**

(54) **PROCÉDÉ D'EXTRACTION DU TANTALE ET/OU DU NIOBIUM D'UNE PHASE AQUEUSE ACIDE ET PROCÉDÉ DE RÉCUPÉRATION DU TANTALE ET/OU DU NIOBIUM À PARTIR D'UNE PHASE AQUEUSE ACIDE METTANT EN OEUVRE CE PROCÉDÉ D'EXTRACTION**

VERFAHREN ZUR EXTRAKTION VON TANTAL UND/ODER NIOB AUS EINER SAUREN WÄSSRIGEN PHASE UND VERFAHREN ZUR RÜCKGEWINNUNG VON TANTAL UND/ODER NIOB AUS EINER SAUREN WÄSSRIGEN PHASE UND IMPLEMENTIERUNG DES BESAGTEN EXTRAKTIONSVERFAHRENS

METHOD FOR EXTRACTING TANTALUM AND/OR NIOBIUM FROM AN ACIDIC AQUEOUS PHASE, AND METHOD INTENDED FOR RECOVERING TANTALUM AND/OR NIOBIUM FROM AN ACIDIC AQUEOUS PHASE AND IMPLEMENTING SAID EXTRACTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2014 FR 1455539**

(43) Date de publication de la demande:
**26.04.2017 Bulletin 2017/17**

(73) Titulaires:
- **Commissariat à l'Énergie Atomique et aux Énergies Alternatives 75015 Paris (FR)**
- **Centre National de la Recherche Scientifique 75794 Paris Cedex 16 (FR)**
- **Université de Montpellier 34090 Montpellier (FR)**

(72) Inventeurs:
- **ARRACHART, Guilhem F-30126 Saint-Laurent-des-Arbres (FR)**
- **DUHAMET, Jean F-30200 Bagnols Sur Ceze (FR)**
- **PELLET-ROSTAING, Stéphane F-69100 Villeurbanne (FR)**
- **TOURE, Moussa F-30200 Bagnols Sur Ceze (FR)**
- **TURGIS, Raphaël 74150 Marigny Saint Marcel (FR)**

(74) Mandataire: **Brevalex 95, rue d'Amsterdam 75378 Paris Cedex 8 (FR)**

(56) Documents cités:
**RU-C1- 2 198 844**

- **GIBALO I M ET AL: "Niobium and tantalum extraction from hydrochloric acid solution using benzaldehyde and acetophenone", VESTNIK MOSKOVSKOGO UNIVERSITETA: NAUCNYJ ZURNAL. SERIJA 2, CHIMIJA, MOSKOVSKIJ GOSUDARSTVENNYJ UNIVERSITET IMENI M. V. LOMONOSOVA, MOSKVA, vol. 7, no. 2, 1 janvier 1969 (1969-01-01) , pages 98-101, XP009181623, ISSN: 0201-7385**
- **N.I. Kassikova et al: "Niobium, tantalum and titanium extraction from natural and technological raw materials of the kola peninsula by liquid-liquid extraction methods" In: "Proceedings of papers 3rd balkan metallurgical conference", 27 septembre 2003 (2003-09-27), Balkan Union of Metallurgists, XP002738453, pages 64-68,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

• Raymond A. Foos and H.A. Willhelm: "Application of liquid-liquid extraction to the separation of tantalum from niobium", juillet 1954 (1954-07), AmesLaoboratory Iowa State College, Ames Iowa, XP002738454, pages 10-18, page 10 - page 18

## Description

### DOMAINE TECHNIQUE

La présente invention se rapporte à un procédé permettant d'extraire le tantale ou le niobium ou ces deux éléments métalliques d'une phase aqueuse acide dans laquelle il(s) se trouve(nt).

Elle se rapporte également à un procédé permettant de récupérer le tantale ou le niobium ou ces deux éléments métalliques à partir d'une phase aqueuse acide dans laquelle il(s) se trouve(nt) et mettant en oeuvre ce procédé d'extraction.

La phase aqueuse acide dont peut (peuvent) être extrait(s) ou à partir de laquelle peut (peuvent) être récupéré(s) le tantale et/ou le niobium par les procédés selon l'invention peut notamment être une solution d'attaque acide d'un concentré d'un minerai naturel de tantale et/ou de niobium tel qu'un minerai du type tantalite, columbite, pyrochlore, microlite, columbo-tantalite (aussi connue sous le nom « coltan »), struvérite ou stibiotantalite, ou une solution d'attaque acide d'un concentré issu du traitement d'un minerai naturel autre qu'un minerai de tantale et/ou de niobium tel qu'un concentré d'une scorie d'étain ou un concentré constitué par les rejets de flottation d'une cassitérite.

Toutefois, cette phase aqueuse acide peut également être une solution d'attaque acide d'un concentré d'un « minerai urbain » de tantale et/ou de niobium, c'est-à-dire une solution obtenue à partir d'une « mine » constituée par des déchets industriels et domestiques comprenant du tantale et/ou du niobium et, notamment, par des déchets d'équipements électriques et électroniques (encore appelés « DEEE » ou « D3E »).

### ÉTAT DE LA TECHNIQUE ANTÉRIEURE

De caractères chimiques très proches, le tantale et le niobium se retrouvent naturellement dans les mêmes minerais naturels et, notamment, dans les columbo-tantalites.

Alors qu'il n'était autrefois qu'un produit secondaire de l'exploitation des mines d'étain, le tantale est devenu ces dernières années un métal très recherché pour sa grande résistance à la corrosion. Il est principalement utilisé, sous la forme de poudres ou de fils, dans la fabrication de condensateurs pour l'électronique et, en particulier, pour l'électronique mobile (téléphones portables, ordinateurs portables, tablettes, etc) mais il est également employé dans la production d'outils de coupe ou de tournage, de projectiles à usage militaire et de superalliages destinés à l'industrie aéronautique.

Le niobium, bien que moins prisé que le tantale, représente néanmoins un métal essentiel pour certains secteurs industriels. Ainsi, il entre dans la fabrication d'aciers microalliés pour les pipelines et les plates-formes pétrolières, d'aciers inoxydables pour l'industrie automobile ainsi que dans la production d'alliages et superalliages destinés à l'industrie aéronautique, à l'industrie nucléaire, à la pétrochimie et à certains appareils médicaux comme les appareils de résonance magnétique nucléaire.

Actuellement, la récupération du tantale et du niobium à partir d'un concentré minéral est réalisée en soumettant une solution aqueuse, issue de l'attaque de ce concentré par un mélange d'acide fluorhydrique et d'acide sulfurique, à un traitement hydrométallurgique.

Deux voies différentes sont typiquement utilisées :

- une première voie, dite ci-après voie 1, qui consiste à extraire conjointement le tantale et le niobium de la solution aqueuse, puis à séparer secondairement ces deux éléments l'un de l'autre ; et
- une deuxième voie, dite ci-après voie 2, qui consiste à extraire l'un après l'autre le tantale et le niobium de la solution aqueuse en jouant sur l'acidité de cette solution.

Dans tous les cas, l'extraction (groupée ou séquentielle) du tantale et du niobium est effectuée au moyen d'une phase organique comprenant ou constituée d'un extractant.

L'utilisation potentielle, en tant qu'extractants du tantale et/ou du niobium, a été étudiée pour de très nombreux composés organiques, parmi lesquels on peut citer l'acide bis-(2-éthylhexyl)phosphorique (ou HDEHP), l'oxyde de trioctyl-phosphine (ou TOPO), le dibenzo-18-couronne-6 (ou DB18C6), des phosphates de tri-n-alkyle tels que le phosphate de tri-*n*-butyle (ou TBP), des cétones telles que la diisopropyl-cétone, la diisopropylbutylcétone, la *n*-butyléthylcétone, la méthylisobutylcétone (ou MIBK), la cyclohexanone et l'acétophénone (références **[2]** à **[5]**), des amides tels que le diméthylheptylacétamide et le bis-2-éthylhexylacétamide, des amines secondaires et tertiaires telles que la tri-*n*-octylamine, l'Alamine™ 336 et la tri-*n*-décylamine, des sels d'ammonium quaternaire tels que les chlorures de tri-*n*-octylméthylammonium, de tri-*n*-octylpropylammonium et de cétylbenzyldiméthylammonium, l'iodure de tétrahexyl-ammonium, l'hydroxyde de tri-*n*-octylméthylammonium, le sulfate de bis-tri-*n*-octylméthylammonium et le nitrate de tri-*n*-octylméthylammonium, ainsi que des alcools à longue chaîne tels que le 1-octanol, le 2-octanol et l'alcool isoamylique.

Or, parmi tous ces composés, seuls la MIBK, le TBP, la cyclohexanone et le 2-octanol sont, à ce jour, utilisés industriellement.

Toutefois, aucun de ces extractants ne donne totalement satisfaction.

En effet, la MIBK, qui est, des quatre extractants précités, celui qui est le plus utilisé dans le monde, présente une solubilité dans l'eau relativement élevée (de l'ordre de 2% massique), une forte volatilité et un point d'éclair (ou point d'inflammabilité) faible (14°C). Il en résulte que la MIBK pose des problèmes de sécurité puisque les extracteurs-mélangeurs et les pompes qui sont utilisés pour récupérer le tantale et le niobium à une échelle industrielle, sont susceptibles de produire des charges électrostatiques, voire des étincelles, qui peuvent, en présence de MIBK, conduire à des explosions.

Le TBP, qui est très utilisé en Russie et en Inde, présente l'avantage d'avoir une solubilité relativement faible dans l'eau (0,6% massique) et un point d'éclair élevé (193°C). Toutefois, il est instable en présence d'acide fluorhydrique et ses produits d'hydrolyse, tels que le phosphore(V), nuisent à la pureté du tantale et du niobium obtenus en fin de traitement.

La cyclohexanone présente, elle, une solubilité très élevée dans l'eau, de l'ordre de 16% massique, ce qui justifie son faible usage.

Quant au 2-octanol, s'il présente l'avantage d'avoir une très faible solubilité dans l'eau (< à 0,1% massique), d'être peu volatile et d'avoir un point d'éclair relativement élevé (71°C), rendant son utilisation moins risquée que celle de la MIBK, il présente le double inconvénient d'avoir une viscosité relativement forte (8 mPa.s), ce qui oblige à l'utiliser en solution dans un diluant organique, et d'avoir une faible sélectivité pour le tantale en présence d'une solution aqueuse d'acidité faible à modérée, qui est le type de solution aqueuse que l'on utilise soit pour séparer le tantale du niobium après leur coextraction (voie 1) soit pour extraire le tantale sans extraire le niobium (voie 2).

Pour une description détaillée des différents avantages et inconvénients de la MIBK, du TBP, de la cyclohexanone et du 2-octanol, le lecteur est invité à se référer à l'article de revue aux noms de Z. Zhu et C. Y. Cheng, Hydrometallurgy 2011, 107, 1-12 (référence **[1]**).

Dans la perspective de satisfaire des besoins en tantale et en niobium en perpétuelle augmentation au niveau mondial et, parallèlement, de répondre à une nécessité de valoriser les déchets industriels et urbains contenant ces métaux, pour des raisons à la fois de protection sanitaires et environnementales et de diminution des risques de pénurie, il serait souhaitable de disposer d'un composé qui, tout en ayant une aptitude remarquable à extraire le tantale et le niobium, soit d'une manière générale exempt de tous les inconvénients que présentent les composés utilisés à ce jour pour extraire ces deux éléments métalliques d'une phase aqueuse.

Or, dans le cadre de leurs travaux, les Inventeurs ont constaté que la 4-méthylacétophénone, qui présente une très faible solubilité dans l'eau (< à 0,2% massique), un point d'éclair relativement élevé (85,1 ± 8,8°C), une viscosité modérée (1,88 mPa.s) et variant peu en présence d'une charge en cations métalliques, et qui, de plus, est stable en présence d'acides forts et, notamment, d'acide fluorhydrique, permet d'extraire le tantale et le niobium d'une phase aqueuse acide et ce, à la fois très efficacement et avec une haute sélectivité par rapport aux autres éléments métalliques susceptibles d'être également présents dans cette phase aqueuse acide tels que le fer, le nickel, l'argent, l'aluminium ou le manganèse.

Et c'est donc sur cette constatation qu'est basée la présente invention.

## EXPOSÉ DE L'INVENTION

L'invention a donc, en premier lieu, pour objet un procédé d'extraction d'au moins un élément métallique choisi parmi le tantale et le niobium d'une phase aqueuse A1 acide, qui comprend au moins une étape comprenant la mise en contact de la phase aqueuse A1 avec une phase organique, puis la séparation de la phase aqueuse A1 de la phase organique, et qui est caractérisé en ce que la phase organique comprend une (alkyl en $C_1$ à $C_4$)-acétophénone en tant qu'extractant.

On rappelle que les (alkyl en $C_1$ à $C_4$)-acétophénones sont des composés qui répondent à la formule (I) ci-après :

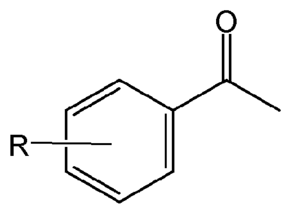

(I)

dans laquelle R représente un groupe alkyle, linéaire ou ramifié, qui comprend de 1 à 4 atomes de carbone, c'est-à-dire un groupe méthyle, éthyle, *n*-propyle, isopropyle, *n*-butyle, *sec*-butyle, isobutyle ou *tert*-butyle, et peut être situé en ortho, en méta ou en para du groupe acétyle.

Dans le cadre de l'invention, on préfère que l'(alkyl en $C_1$ à $C_4$)-acétophénone soit une méthylacétophénone, c'est-à-dire qu'elle réponde à la formule (II) ci-après :

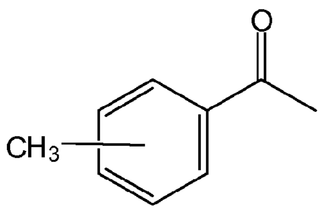

(II)

dans laquelle le groupe méthyle porté par le groupe phényle peut être situé en ortho, en méta ou en para du groupe acétyle.

Ainsi, on distingue :

- la 2-méthylacétophénone (encore appelée 1-(2-méthylphényl)-éthanone) et dans laquelle le groupe méthyle porté par le groupe phényle est situé en ortho du groupe acétyle ;
- la 3-méthylacétophénone (encore appelée 1-(3-méthylphényl)-éthanone) et dans laquelle le groupe méthyle porté par le groupe phényle est situé en méta du groupe acétyle ; et

- la 4-méthylacétophénone (encore appelée 1-(4-méthylphényl)-éthanone) et dans laquelle le groupe méthyle porté par le groupe phényle est situé en para du groupe acétyle.

Parmi ces méthylacétophénones, on préfère tout particulièrement la 4-méthylacétophénone que l'on désignera plus simplement « 4-MAcPh » dans ce qui suit.

Par ailleurs, dans le cadre de l'invention, on préfère que la phase organique soit constituée par l'(alkyl en $C_1$ à $C_4$)-acétophénone, c'est-à-dire qu'elle ne comprenne rien d'autre que ce composé et, notamment, qu'elle ne comprenne pas de diluant organique, auquel cas l'(alkyl en $C_1$ à $C_4$)-acétophénone représente 100% en masse de la masse de la phase organique. En effet, il est plus simple de gérer, à une échelle industrielle, des effluents organiques à un seul constituant que des effluents organiques à plusieurs constituants. De plus, l'absence d'un diluant organique, dont l'utilisation n'est le plus souvent motivée que par la nécessité de créer une différence de densité propre à faciliter la séparation des phases aqueuse et organique, permet de diminuer considérablement le volume de phase organique nécessaire à la mise en oeuvre du procédé.

Toutefois, il va de soi qu'il est tout à fait possible de prévoir que la phase organique comprenne un coextractant, c'est-à-dire un deuxième composé ayant, lui aussi, une aptitude à extraire le tantale et/ou le niobium d'une phase aqueuse acide, ou bien un diluant organique (par exemple, un diluant organique de type aliphatique tel que le n-dodécane, le tétrapropylène hydrogéné ou le kérosène tel que celui commercialisé par la société TOTAL sous la référence commerciale Isane IP-185) ou bien encore les deux.

Auquel cas, l'(alkyl en $C_1$ à $C_4$)-acétophénone représente avantageusement au moins 50% en masse, de préférence, au moins 80% en masse et, mieux encore, au moins 85% en masse de la masse de la phase organique.

Conformément à l'invention, la phase aqueuse A1 comprend avantageusement un premier acide minéral fort, qui est l'acide fluorhydrique, et un deuxième acide minéral fort autre que l'acide fluorhydrique comme, par exemple, l'acide sulfurique, l'acide nitrique, l'acide phosphorique ou l'acide chlorhydrique, les Inventeurs ayant, en effet, constaté que la présence conjointe d'acide fluorhydrique et d'un autre acide minéral fort dans la phase aqueuse A1 conduit à des coefficients de distribution du tantale et du niobium ainsi qu'à des rendements d'extraction de ces deux éléments métalliques significativement plus élevés que ceux qui sont obtenus lorsque cette phase aqueuse ne comprend que de l'acide fluorhydrique.

Parmi les acides minéraux forts susceptibles d'être présents dans la phase aqueuse A1, conjointement avec l'acide fluorhydrique, préférence est donnée à l'acide sulfurique qui, outre d'être l'un des acides qui conduit aux coefficients de distribution du tantale et du niobium ainsi qu'aux rendements d'extraction de ces deux éléments métalliques les plus élevés (comme montré dans l'exemple 2 ci-après), présente le double avantage d'être l'acide minéral fort le moins cher du marché et de produire des effluents aqueux qui sont relativement faciles à traiter à une échelle industrielle car les ions sulfate présents dans ces effluents peuvent être éliminés en grande partie, conjointement avec les ions fluorure, par précipitation à la chaux.

Lorsque la phase aqueuse A1 comprend à la fois de l'acide fluorhydrique et un deuxième acide minéral fort, alors sa concentration en acide fluorhydrique est, de préférence, inférieure à sa concentration en deuxième acide minéral fort de sorte à réduire la quantité de fluorures produits par la mise en oeuvre du procédé d'extraction de l'invention. Ainsi, typiquement, la concentration en acide fluorhydrique de la phase aqueuse A1 ne dépasse pas 1,5 mol/L.

Dans le cadre de l'invention, on préfère que la phase aqueuse A1 ait une concentration totale en acides allant de 1,5 mol/L à 9,5 mol/L, auquel cas, cette phase aqueuse comprend, de préférence, une concentration en acide fluorhydrique allant de 0,5 mol/L à 1,5 mol/L et une concentration en deuxième acide minéral fort allant de 1 mol/L à 9 mol/L.

Dans un premier mode de mise en oeuvre du procédé d'extraction de l'invention, la phase aqueuse A1 comprend du tantale mais ne comprend pas de niobium.

Dans ce cas, la phase aqueuse A1 a, de préférence, une concentration totale en acides allant de 3,5 mol/L à 9,5 mol/L et, mieux encore, de 6 mol/L à 8 mol/L, cette gamme d'acidités s'étant, en effet, révélée être la plus propice à l'extraction du tantale.

Une telle phase aqueuse comprend, par exemple, de 0,5 mol/L à 1 mol/L d'acide fluorhydrique et de 2,5 mol/L à 9 mol/L d'acide sulfurique et, mieux encore, 0,5 mol/L d'acide fluorhydrique et de 5,5 à 7,5 mol/L d'acide sulfurique.

Dans un deuxième mode de mise en oeuvre du procédé d'extraction de l'invention, la phase aqueuse A1 comprend du niobium mais ne comprend pas de tantale.

Dans ce cas, la phase aqueuse A1 a, de préférence, une concentration totale en acides allant de 5 mol/L à 9,5 mol/L et, mieux encore, de 6 mol/L à 8 mol/L, cette gamme d'acidités s'étant, en effet, révélée être la plus propice à l'extraction du niobium.

Une telle phase aqueuse comprend, par exemple, de 0,5 mol/L à 1 mol/L d'acide fluorhydrique et de 4,5 mol/L à 9 mol/L d'acide sulfurique et, mieux encore, 0,5 mol/L d'acide fluorhydrique et de 5,5 mol/L à 7,5 mol/L d'acide sulfurique.

Dans un troisième mode de mise en oeuvre du procédé d'extraction de l'invention, la phase aqueuse A1 comprend du tantale et du niobium.

Dans ce cas, deux modalités de mise en oeuvre peuvent être envisagées selon que l'on souhaite extraire de manière groupée ou séquentielle le tantale et le niobium de la phase aqueuse A1.

En effet :

- pour extraire de manière groupée le tantale et le niobium de la phase aqueuse A1, alors cette phase aqueuse a, de préférence, une concentration totale en acides allant de 5 mol/L à 9,5 mol/L et, mieux encore, de 6 mol/L à 8 mol/L et comprend, par exemple, de 0,5 mol/L à 1 mol/L d'acide fluorhydrique et de 4,5 mol/L à 9 mol/L d'acide sulfurique et, mieux encore, 0,5 mol/L d'acide fluorhydrique et de 5,5 mol/L à 7,5 mol/L d'acide sulfurique ; tandis que
- pour extraire de manière séquentielle le tantale et le niobium de la phase aqueuse A1, alors le procédé de l'invention comprend successivement et dans cet ordre :

  * une première étape comprenant la mise en contact de la phase aqueuse A1 avec une première phase organique comprenant l'(alkyl en $C_1$ à $C_4$)-acétophénone, la phase aqueuse A1 ayant, de préférence, une concentration totale en acides allant de 1,5 mol/L à 3,5 mol/L, puis la séparation de la phase aqueuse A1 de la première phase organique, moyennant quoi le tantale est sélectivement extrait de la phase aqueuse A1 ; et
  * une deuxième étape comprenant la mise en contact de la phase aqueuse A1 avec une deuxième phase organique comprenant l'(alkyl en $C_1$ à $C_4$)-acétophénone, la phase aqueuse A1 ayant, de préférence, une concentration totale en acides allant de 5 mol/L à 9,5 mol/L et, mieux encore, de 6 mol/L à 8 mol/L, puis la séparation de la phase aqueuse A1 de la deuxième phase organique, moyennant quoi le niobium est extrait de la phase aqueuse A1.

Le procédé d'extraction qui vient d'être décrit peut notamment être mis à profit pour récupérer le tantale et/ou le niobium d'une phase aqueuse acide dans laquelle il(s) se trouve(nt) en vue de produire du tantale et/ou du niobium soit sous forme métallique (c'est-à-dire à l'état d'oxydation 0) soit sous forme d'un (de) composé(s) tels que le pentoxyde de tantale ($Ta_2O_5$), le nitrure de tantale (TaN), le carbure de tantale ($TaC_x$), le tantalate de lithium, ($LiTaO_3$), le fluorotantalate de potassium ($K_2TaF_7$), le pentoxyde de niobium ($Nb_2O_5$), le nitrure de niobium (NbN), le carbure de niobium ($NbC_x$), le niobate de lithium, ($LiNbO_3$), etc.

Aussi, l'invention a-t-elle aussi pour objet un procédé de récupération d'au moins un élément métallique choisi parmi le tantale et le niobium à partir d'une phase aqueuse A1 acide, qui comprend :

a) l'extraction dudit au moins un élément métallique de la phase aqueuse A1 par un procédé d'extraction tel que précédemment décrit ; et

b) la désextraction dudit au moins un élément métallique de la phase organique obtenue à l'issue de a).

Dans un premier mode de mise en oeuvre du procédé de récupération de l'invention, la phase organique obtenue à l'issue de a) comprend du tantale mais ne comprend pas de niobium, auquel cas b) comprend la mise en contact de la phase organique obtenue à l'issue de a) avec une phase aqueuse, puis la séparation de la phase organique de la phase aqueuse, moyennant quoi le tantale est désextrait de la phase organique.

La phase aqueuse servant à désextraire le tantale est avantageusement une solution aqueuse d'un sel de sodium, de potassium ou d'ammonium, et notamment une solution aqueuse d'oxalate d'ammonium présentant une concentration en oxalate d'ammonium allant de 0,1 mol/L à 0,5 mol/L et, de préférence, égale à 0,2 mol/L.

Dans un deuxième mode de mise en oeuvre du procédé de récupération de l'invention, la phase organique obtenue à l'issue de a) comprend du niobium mais ne comprend pas de tantale, auquel cas b) comprend la mise en contact de la phase organique obtenue à l'issue de a) avec une phase, puis la séparation de la phase organique de la phase aqueuse, moyennant quoi le niobium est désextrait de la phase organique.

La phase aqueuse servant à désextraire le niobium peut notamment être une solution aqueuse d'un acide, par exemple l'acide sulfurique, dont l'acidité est choisie de sorte que le niobium ne soit pas ou que très peu extractible par l'(alkyl en $C_1$ à $C_4$)-acétophénone. Ainsi, par exemple, dans le cas où cette phase aqueuse est solution d'acide sulfurique, alors elle a, de préférence, une concentration en acide sulfurique allant de 1 à 3 mol/L.

En variante, il peut également s'agir d'une solution aqueuse d'un sel tel que ceux précités.

Dans un troisième mode de mise en oeuvre du procédé de récupération de l'invention, la phase organique obtenue à l'issue de a) comprend du tantale et du niobium, auquel cas b) comprend successivement et dans cet ordre :

- la désextraction du niobium de la phase organique, laquelle désextraction comprend la mise en contact de la phase organique avec une phase aqueuse A2, puis la séparation de la phase organique de la phase aqueuse A2 ; et
- la désextraction du tantale de la phase organique, laquelle désextraction comprend la mise en contact de la phase organique avec une phase aqueuse A3, puis la séparation de la phase organique de la phase aqueuse A3.

La phase aqueuse A2 peut être du même type que la phase aqueuse décrite ci-avant pour la désextraction du niobium dans le deuxième mode de mise en oeuvre du procédé de récupération de l'invention, tandis que la phase aqueuse A3 peut être du même type que

la phase aqueuse décrite ci-avant pour la désextraction du tantale dans le premier mode de mise en oeuvre du procédé de récupération de l'invention.

Conformément à l'invention, la phase aqueuse acide A1 dont est (sont) extrait(s) le tantale et/ou le niobium ou à partir de laquelle est (sont) récupéré(s) le tantale et/ou le niobium est une solution d'attaque acide d'un concentré d'un minerai naturel ou urbain comprenant du tantale et/ou du niobium.

De préférence, cette phase aqueuse est une solution d'attaque aux acides fluorhydrique et sulfurique d'un tel concentré.

D'autres caractéristiques et avantages de l'invention ressortiront du complément de description qui suit et qui se rapporte à des essais expérimentaux ayant permis de valider le procédé d'extraction de l'invention ainsi qu'à un exemple de mise en oeuvre du procédé de récupération de l'invention dans un schéma industriel de production de tantale et de niobium à partir d'un concentré d'un minerai naturel ou urbain comprenant du tantale et du niobium.

Il va de soi que ce complément de description n'est donné qu'à titre d'illustration de l'objet de l'invention et ne doit en aucun cas être interprété comme une limitation de cet objet.

## BRÈVE DESCRIPTION DES DESSINS

La figure 1 illustre l'influence du rapport O/A sur le rendement d'extraction du tantale ($R_{Ta}$) lorsque celui-ci est extrait d'une phase aqueuse acide au moyen d'une phase organique constituée de 4-MAcPh.

La figure 2 illustre l'influence de la composition en acide(s) d'une phase aqueuse acide comprenant du tantale sur le coefficient de distribution ($D_{Ta}$) et le rendement d'extraction ($R_{Ta}$) de ce métal lorsque celui-ci est extrait de cette phase aqueuse au moyen d'une phase organique constituée de 4-MAcPh.

La figure 3 illustre l'influence de l'acidité d'une phase aqueuse acide comprenant du tantale et du niobium sur les coefficients de distribution de ces métaux ($D_M$) lorsque ceux-ci sont extraits de cette phase aqueuse au moyen d'une phase organique constituée de 4-MAcPh.

La figure 4 illustre la supériorité des propriétés extractantes de la 4-MAcPh sur celles de la MIBK et du 2-octanol pour l'extraction du tantale et du niobium.

La figure 5 illustre l'aptitude que présente la 4-MAcPh à extraire sélectivement le tantale d'une phase aqueuse acide comprenant, outre ce tantale, des impuretés métalliques (fer, nickel, argent, manganèse).

La figure 6 illustre schématiquement un exemple de mise en oeuvre du procédé de récupération de l'invention dans un schéma industriel de production de tantale et de niobium à partir d'un concentré d'un minerai naturel ou urbain comprenant du tantale et du niobium ; sur cette figure, les rectangles référencés 1 à 4 représentent des extracteurs multi-étagés tels que classiquement utilisés pour réaliser des extractions liquide-liquide à une échelle industrielle comme, par exemple, des extracteurs constitués de batteries de mélangeurs-décanteurs ; par ailleurs, les flux de phase organique entrant et sortant de ces extracteurs sont symbolisés par un trait continu tandis que les flux de phase aqueuse entrant et sortant desdits extracteurs sont symbolisés par un trait interrompu.

## EXPOSÉ DÉTAILLÉ DE MODES DE RÉALISATION PARTICULIERS

Dans les exemples qui suivent, toutes les mesures de concentration ont été réalisées par spectrométrie d'émission atomique par torche à plasma, encore connue sous le sigle ICP-AES.

Par ailleurs, les coefficients de distribution et les rendements d'extraction ont été déterminés conformément aux conventions du domaine des extractions liquide-liquide, à savoir que :

- le coefficient de distribution d'un élément métallique M, noté $D_M$, entre une deux phases, respectivement organique et aqueuse, est égal à :

$$D_M = \frac{[M]_{org.}}{[M]_{aq.}}$$

avec :

$[M]_{org.}$ = concentration de l'élément métallique dans la phase organique à l'équilibre d'extraction (en mg/L) ; et
$[M]_{aq.}$ = concentration de l'élément métallique dans la phase aqueuse à l'équilibre d'extraction (en mg/L).

- le rendement d'extraction d'un élément métallique M, noté $R_M$ et exprimé en pourcentage, est égal à :

$$R_M = \frac{D_M}{D_M + \left(\frac{A}{O}\right)} \text{ x } 100$$

avec :

$D_M$ = coefficient de distribution de l'élément métallique ;
A/O = rapport entre les volumes (pour une extraction en mode discontinu) ou les débits (pour

une extraction en mode continu) des phases aqueuse et organique.

**EXEMPLE 1 : Extraction du tantale d'une phase aqueuse acide - Influence du rapport O/A**

L'influence du rapport O/A (qui est l'inverse du rapport A/O ci-dessus défini) sur l'extraction du tantale d'une phase aqueuse acide par la 4-MAcPh a été appréciée par une série de tests d'extraction qui ont été réalisés en tubes, en utilisant :

- comme phases organiques, des phases constituées de 4-MAcPh ; et
- comme phases aqueuses acides, des aliquotes d'une solution aqueuse comprenant 9,49 g/L de tantale sous forme d'hexafluorotantalate d'ammonium ($NH_4TaF_6$), 0,50 mol/L d'acide fluorhydrique (HF) et 3 mol/L d'acide sulfurique ($H_2SO_4$) ; et en faisant varier le rapport volumique entre les phases organiques et aqueuses de 0,25 à 5.

Les phases organiques et aqueuses ont été mises en contact les unes avec les autres pendant 30 minutes à température ambiante (20-23°C), sous agitation, puis séparées les unes des autres par décantation.

Les résultats de ces tests sont montrés sur la figure 1 qui illustre, sous la forme d'une courbe, l'évolution du rendement d'extraction du tantale, noté $R_{Ta}$ et exprimé en pourcentage, en fonction du rapport volumique O/A utilisé.

Comme visible sur cette figure, le rendement d'extraction du tantale augmente avec l'augmentation du rapport O/A jusqu'à ce que ce rapport atteigne la valeur de 1. L'extraction du tantale est alors effective ($R_{Ta}$ = 99,66%) et reste constante pour des rapports O/A supérieurs à 1.

Les tests rapportés dans les exemples qui suivent ont donc été réalisés en utilisant des rapports volumiques O/A de 1 sauf indication contraire.

**EXEMPLE 2 : Extraction du tantale d'une phase aqueuse acide - Influence de la composition en acide(s) de la phase aqueuse acide**

L'influence de la composition en acide(s) que présente une phase aqueuse acide sur l'extraction du tantale lorsque celui-ci est extrait de cette phase aqueuse par la 4-MAcPh a été appréciée par une série de tests d'extraction qui ont été réalisés en tubes, en utilisant :

- comme phases organiques, des phases constituées de 4-MAcPh ; et
- comme phases aqueuses acides, les solutions aqueuses S1 à S5 suivantes :

  S1 : 9,69 g/L de tantale sous forme de tantale pentachloré ($TaCL_5$) et 1,15 mol/L d'HF ;

  S2 : 8,35 g/L de tantale sous forme de $TaCl_5$, 0,93 mol/L d'HF et 3 mol/L d'$HNO_3$ ;

  S3 : 8,31 g/L de tantale sous forme de $TaCl_5$, 0,92 mol/L d'HF et 3 mol/L d'acide phosphorique ($H_3PO_4$) ;

  S4 : 7,77 g/L de tantale sous forme de $TaCl_5$, 0,86 mol/L d'HF et 3 mol/L d'acide chlorhydrique (HCl) ;

  S5 : 9,24 g/L de tantale sous forme de $TaCl_5$, 0,996 mol/L d'HF et 3 mol/L d'$H_2SO_4$.

Les phases organiques et aqueuses ont été mises en contact les unes avec les autres pendant 30 minutes à température ambiante (20-23°C), sous agitation, puis séparées les unes des autres par décantation.

Les résultats de ces tests sont montrés sur la figure 2 qui illustre, sous la forme de diagrammes en bâtons, la variation du coefficient de distribution du tantale, noté $D_{Ta}$, tel qu'obtenu en fonction des solutions S1 à S5 (bâtons hachurés) et le rendement d'extraction du tantale, noté $R_{Ta}$ et exprimé en pourcentage (bâtons blancs), tel qu'obtenu pour chacune de ces solutions.

Cette figure montre qu'un coefficient de distribution du tantale légèrement supérieur à 1 est obtenu pour une solution aqueuse ne contenant que de l'acide fluorhydrique comme acide (solution S1) et que des coefficients de distribution du tantale supérieurs à 15 sont obtenus lorsqu'est ajouté à cette solution un autre acide minéral fort (solutions S2 à S5), les meilleurs résultats étant obtenus lorsque cet acide minéral fort est de l'acide chlorhydrique (solution S4, $D_{Ta}$ = 26,58) ou de l'acide sulfurique (solution S5, $D_{Ta}$ = 21,72).

**EXEMPLE 3 : Extraction du tantale et du niobium d'une phase aqueuse acide - Influence de l'acidité de la phase aqueuse acide**

L'influence de l'acidité que présente une phase aqueuse acide sur l'extraction du tantale et du niobium lorsque ceux-ci sont extraits de cette phase aqueuse par la 4-MAcPh a été étudiée par une série de tests d'extraction qui ont été réalisés en tubes, en utilisant :

- comme phases organiques, des phases constituées de 4-MAcPh ; et
- comme phases aqueuses acides, des solutions aqueuses contenant de 1,85 à 1,59 g/L de tantale sous la forme de $NH_4TaF_6$, de 2,14 à 1,63 g/L de niobium sous la forme d'hexafluoroniobate d'ammonium ($NH_4NbF_6$), 0,5 mol/L d'HF et de 1 à 9 mol/L d'$H_2SO_4$.

Les phases organiques et aqueuses ont été mises en contact les unes avec les autres pendant 30 minutes à température ambiante (20-23°C), sous agitation, puis séparées les unes des autres par décantation.

Les résultats de ces tests sont montrés sur la figure 3 qui illustre l'évolution du coefficient de distribution, noté $D_M$, tel qu'obtenu pour le tantale d'une part (ligne brisée A) et pour le niobium d'autre part (ligne brisée B) en fonction de la concentration initiale en $H_2SO_4$, exprimée en mol/L, des phases aqueuses acides.

Cette figure montre que les propriétés extractantes de la 4-MAcPh permettent d'envisager, lorsque l'on souhaite récupérer à la fois le tantale et le niobium à partir d'une même phase aqueuse acide comprenant à la fois de l'acide fluorhydrique et de l'acide sulfurique, deux schémas d'extraction différents, à savoir :

- un premier schéma qui consiste à extraire de façon groupée le tantale et le niobium à forte acidité, c'est-à-dire en amenant la concentration totale en acides de cette phase à une valeur au moins égale à 5 mol/L et, mieux encore, au moins égale à 6 mol/L (par exemple, par la présence dans cette phase de 0,5 mol/L d'HF et d'au moins 5,5 mol/L d'$H_2SO_4$), puis à séparer le tantale du niobium en désextrayant le niobium de la phase organique résultante au moyen d'une phase aqueuse acide dont la concentration totale en acides ne dépasse pas 3,5 mol/L comme, par exemple, une phase aqueuse comprenant 0,5 mol/L d'HF et au plus 3 mol/L d'$H_2SO_4$ ; et
- un deuxième schéma qui consiste à extraire tout d'abord sélectivement le tantale en amenant la concentration en acides de la phase aqueuse A1 à une valeur ne dépassant pas 3,5 mol/L (par exemple, par la présence dans cette phase de 0,5 mol/L d'HF et d'au plus 3 mol/L d'$H_2SO_4$), puis à extraire secondairement le niobium en amenant la concentration en acides de la phase aqueuse A1 à une valeur au moins égale à 5 mol/L et, mieux encore, au moins égale à 6 mol/L (par exemple, par la présence dans cette phase de 0,5 mol/L d'HF et d'au moins 5,5 mol/L d'$H_2SO_4$).

Dans les deux schémas, le tantale présent dans la phase organique peut ensuite être désextrait de celle-ci au moyen d'une phase aqueuse comprenant un sel de sodium, de potassium ou d'ammonium tel que l'oxalate d'ammonium ($(NH_4)_2C_2O_4$), par exemple à hauteur de 0,2 mol/L, comme montré dans l'exemple 6 ci-après.

Dans le deuxième schéma, le niobium présent dans la phase organique peut ensuite être désextrait de celle-ci de la même manière que dans le premier schéma, c'est-à-dire au moyen d'une phase aqueuse acide dont la concentration totale en acides ne dépasse pas 3,5 mol/L.

**EXEMPLE 4: Extraction du tantale et du niobium d'une phase aqueuse acide - Comparaison des propriétés extractantes de la 4-MAcPh, de la MIBK et du 2-octanol**

Une étude a été menée pour comparer l'aptitude de la 4-MAcPh à extraire le tantale et le niobium d'une phase aqueuse acide à celle que présentent la MIBK et le 2-octanol.

Pour ce faire, une série de tests d'extraction a été réalisée en tubes, en utilisant :

- comme phases organiques, des phases constituées soit de 4-MAcPh, soit de MIBK, soit de 2-octanol ; et
- comme phases aqueuses acides, des solutions aqueuses contenant de 1,85 à 1,59 g/L de tantale sous la forme de $NH_4TaF_6$, de 2,14 à 1,63 g/L de niobium sous la forme de $NH_4NbF_6$, 0,5 mol/L d'HF et de 1 à 9 mol/L d'$H_2SO_4$.

Les phases organiques et aqueuses ont été mises en contact les unes avec les autres pendant 30 minutes à température ambiante (20-23°C), sous agitation, puis séparées les unes des autres par décantation.

Les résultats de ces tests sont montrés sur la figure 4 qui illustre l'évolution du coefficient de distribution, noté $D_M$, tel qu'obtenu, d'une part, pour le tantale avec la 4-MAcPh (ligne brisée $A_{Ta}$), la MIBK (ligne brisée $B_{Ta}$) et le 2-octanol (ligne brisée $C_{Ta}$), et, d'autre part, pour le niobium avec la 4-MAcPh (ligne brisée $A_{Nb}$), la MIBK (ligne brisée $B_{Nb}$) et le 2-octanol (ligne brisée $C_{Nb}$) en fonction de la concentration initiale en $H_2SO_4$, exprimée en mol/L, des phases aqueuses acides.

Cette figure met en évidence un profil d'extraction similaire pour les trois extractants.

Par contre, elle montre que la 4-MAcPh conduit aux coefficients de distribution les plus élevés dans la gamme d'acidité étudiée avec un coefficient de distribution variant de 6,86 à 14,65 pour le tantale et de 0 à 2,17 pour le niobium.

Elle montre également que le coefficient de distribution du tantale est inférieur à 1 lorsque celui-ci extrait par le 2-octanol d'une solution aqueuse à 0,5 mol/L d'HF et 1 mol/L d'$H_2SO_4$ et qu'il se produit une solubilisation de la MIBK pour des acidités supérieures à 0,5 mol/L d'HF et 6 mol/L de $H_2SO_4$.

**EXEMPLE 5 : Extraction du tantale de phases aqueuses acides mimant une solution aqueuse acide issue d'un DEEE**

L'aptitude de la 4-MAcPh à extraire le tantale d'une solution aqueuse acide sans extraire les impuretés métalliques susceptibles d'être également présentes dans cette solution a été vérifiée par une série de tests d'extraction qui ont été réalisés en tubes, en utilisant :

- comme phases organiques, des phases constituées de 4-MAcPh ; et
- comme phases aqueuses acides, des solutions aqueuses mimant une solution aqueuse acide issue d'un DEEE et comprenant de 0,19 à 0,10 g/L de tantale sous la forme de $NH_4TaF_6$, de 0,19 à 0,10 g/L de fer ($Fe^{3+}$), de 0,20 à 0,10 g/L de nickel ($Ni^{2+}$), de 0,19 à 0,10 g/L d'argent ($Ag^{1+}$), de 0,20 à 0,10 g/L de manganèse ($Mn^{2+}$), 0,5 mol/L d'HF et de 1 à 9

mol/L d'$H_2SO_4$.

Les phases organiques et aqueuses ont été mises en contact les unes avec les autres pendant 30 minutes à température ambiante (20-23°C), sous agitation, puis séparées les unes des autres par décantation.

Les résultats de ces tests sont montrés sur la figure 5 qui illustre l'évolution du coefficient de distribution, noté $D_M$, tel qu'obtenu, d'une part, pour le tantale (ligne brisée A) et, d'autre part, pour le fer, le nickel, l'argent et le manganèse (ligne droite B) en fonction de la concentration initiale en $H_2SO_4$, exprimée en mol/L, des phases aqueuses acides.

Cette figure montre que ni le fer ni le nickel ni l'argent ni le manganèse ne sont extraits par la 4-MAcPh contrairement au tantale qui, lui, est extrait très efficacement par ce composé avec un coefficient de distribution qui atteint une valeur de 148 pour une concentration en $H_2SO_4$ de 6 mol/L.

Les résultats obtenus dans le cadre du présent exemple, pris en combinaison avec les résultats obtenus dans le cadre de l'exemple 4, permettent de considérer qu'il devrait être possible d'extraire le tantale et le niobium d'une solution aqueuse acide sans que les autres éléments métalliques présents dans cette solution soient extraits en réglant la concentration en acide(s) fort(s) de ladite solution à une valeur comprise entre 6 mol/L et 9 mol/L.

**EXEMPLE 6 : Désextraction du tantale d'une phase organique constituée de 4-MAcPh**

La possibilité de désextraire le tantale d'une phase organique constituée de 4-MAcPh dans laquelle il a été préalablement extrait a été vérifiée par des tests d'extraction/désextraction qui ont été réalisés en tubes et consistant :

- à extraire le tantale d'une phase aqueuse acide comprenant 0,89 g/L de tantale, 0,5 mol/L d'HF et 3 mol/L d'$H_2SO_4$ au moyen d'une phase organique constituée de 4-MAcPh ; puis
- à désextraire le tantale de la phase organique au moyen d'une phase aqueuse comprenant 0,2 mol/L d'oxalate d'ammonium.

Dans les deux cas, les phases organique et aqueuse ont été mises en contact l'une avec l'autre, dans un rapport O/A de 0,5, pendant 30 minutes à température ambiante (20-23°C), sous agitation, puis séparées l'une de l'autre par décantation.

Les coefficients de distribution et les rendements d'extraction du tantale tels qu'obtenus lors de ces tests sont présentés dans le tableau I ci-après.

Tableau I

| Paramètres | Extraction | Désextraction |
|---|---|---|
| $D_{Ta}$ | 176,05 | 2,00 |
| $R_{Ta}$ (%) | 99,43 | 50 |

Outre de confirmer l'excellente aptitude que présente la 4-MAcPh à extraire le tantale d'une solution aqueuse acide, ce tableau montre qu'il possible, une fois le tantale extrait dans de la 4-MAcPh, de le désextraire ensuite de celle-ci, notamment au moyen d'une phase aqueuse comprenant de l'oxalate d'ammonium.

**EXEMPLE 7** :

On se réfère à présent à la figure 6 qui illustre un exemple de mise en oeuvre, sous la forme d'un cycle, du procédé de récupération de l'invention dans un schéma industriel de production de tantale et de niobium, par exemple sous la forme de pentoxydes, à partir d'un concentré d'un minerai naturel ou urbain comprenant du tantale et du niobium.

Dans cet exemple de mise en oeuvre, la phase aqueuse A1 acide est, par exemple, une solution aqueuse sulfo-fluorhydrique qui a été obtenue en traitant un concentré d'un minerai naturel ou urbain comprenant du tantale et du niobium par un mélange d'HF et d'$H_2SO_4$, puis filtration de la solution obtenue à l'issue de ce traitement.

Elle peut présenter des teneurs en tantale et en niobium relativement importantes, c'est-à-dire supérieures à 1 g/L, mais elle peut également comprendre de nombreux autres éléments métalliques du type nickel, manganèse, fer, argent, aluminium, zirconium, titane, etc, en quantités non négligeables.

Comme visible sur la figure 6, un cycle du procédé de récupération de l'invention comprend :

- une étape dénommée « Co-extraction Ta/Nb », qui consiste à co-extraire le tantale et le niobium de la phase aqueuse A1 et qui se déroule dans l'extracteur 1 ;
- une étape dénommée « Désextraction Nb », qui consiste à désextraire le niobium de la phase organique issue de la « Co-extraction Ta/Nb » et qui se déroule dans l'extracteur 2 ; et
- une étape dénommée « Désextraction Ta », qui consiste à désextraire le tantale de la phase organique issue de la « Désextraction Nb » et qui se déroule dans l'extracteur 3.

Concrètement, la « Co-extraction Ta/Nb » est réalisée en mettant, dans l'extracteur 1, la phase aqueuse A1 plusieurs fois en contact, à contre-courant, avec une phase organique constituée de 4-MAcPh, chaque mise en contact étant suivie d'une séparation des phases aqueuse et organique.

Comme précédemment indiqué, il est préférable que, pour cette co-extraction, la phase aqueuse A1 ait une concentration totale en acides allant de 5 mol/L à 9,5 mol/L et, mieux encore, de 6 mol/L à 8 mol/L avec au plus 1,5 mol/L d'HF, le reste étant représenté par $H_2SO_4$. Cette phase aqueuse A1 comprend, par exemple, 0,5 mol/L d'HF et 6 mol/L d' $H_2SO_4$.

De ce fait et comme illustré sur la figure 6, un apport d'acide sulfurique concentré est avantageusement prévu sur la conduite servant à alimenter l'extracteur 1 en phase aqueuse A1 de manière à permettre, si nécessaire, un ajustement de l'acidité sulfurique de cette phase aqueuse à une valeur au moins égale à 4 mol/L avant qu'elle ne pénètre dans cet extracteur.

La phase organique sortant de l'extracteur 1, qui est chargée en tantale et en niobium, est dirigée vers l'extracteur 2 dévolu à la « Désextraction Nb », tandis que la phase aqueuse sortant de l'extracteur 1, qui est épurée en tantale et en niobium mais dans laquelle se trouvent les autres éléments métalliques, est envoyée au rebut.

La « Désextraction Nb » est réalisée en mettant, dans l'extracteur 2, la phase organique plusieurs fois en contact, à contre-courant, avec une phase aqueuse A2 qui comprend de 1 mol/L à 3 mol/L d'$H_2SO_4$, chaque mise en contact étant suivie d'une séparation des phases aqueuse et organique. La phase aqueuse A2 comprend, par exemple, 1 mol/L d'$H_2SO_4$.

La phase aqueuse sortant de l'extracteur 2, qui est chargée en niobium, est envoyée vers une unité dénommée « Traitement Nb », dans laquelle cette phase aqueuse est soumise à un traitement permettant de récupérer et de convertir, par exemple en pentoxyde de niobium ($Nb_2O_5$), le niobium présent dans cette phase.

Ce type de traitement, qui est connu en soi, consiste, par exemple, à faire précipiter le niobium sous la forme d'hydroxyde Nb(OH)s par addition d'hydroxyde d'ammonium, puis, après récupération du précipité ainsi formé par décantation, filtration ou tout autre méthode de séparation solide/liquide, à calciner ce précipité à une température de l'ordre de 900°C pour convertir l'hydroxyde en $Nb_2O_5$.

La phase organique sortant de l'extracteur 2, qui est chargée en tantale mais épurée en niobium, est dirigée vers l'extracteur 3 dévolu à la « Désextraction Ta ».

La « Désextraction Ta » est réalisée en mettant, dans l'extracteur 3, la phase organique plusieurs fois en contact, à contre-courant, avec une phase aqueuse A3 qui comprend un sel d'ammonium, par exemple de l'oxalate d'ammonium ($(NH_4)_2C_2O_4$) à une concentration de 0,2 mol/L, chaque mise en contact étant suivie d'une séparation des phases aqueuse et organique.

La phase aqueuse sortant de l'extracteur 3, qui est chargée en tantale, est envoyée vers une unité dénommée « Traitement Ta », dans laquelle cette phase aqueuse est soumise à un traitement permettant de récupérer et de convertir, par exemple en pentoxyde de tantale ($Ta_2O_5$), le tantale présent dans cette phase.

Là également, ce type de traitement est connu en soi. Il consiste, par exemple, à faire précipiter le tantale sous la forme d'oxyde $(NH_4)_2Ta_2O_6$ par addition d'hydroxyde d'ammonium, puis, après récupération du précipité ainsi formé par décantation, filtration ou tout autre méthode de séparation solide/liquide, à calciner ce précipité à une température allant de 750 à 1300°C pour convertir l'oxyde en $Ta_2O_5$.

La phase organique sortant de l'extracteur 3, qui est épurée en niobium et en tantale, est, quant à elle, dirigée vers un quatrième extracteur (extracteur 4) dans lequel elle est soumise à un traitement qui permet de purification en vue de sa réutilisation dans le cycle suivant. Ce traitement consiste, par exemple, à mettre, dans l'extracteur 4, cette phase organique plusieurs fois en contact, à contre-courant, avec une solution aqueuse d'$H_2SO_4$ dilué, ce qui permet aussi de pré-équilibrer la phase organique en $H_2SO_4$ avant qu'elle ne soit réutilisée dans le cycle suivant.

## RÉFÉRENCES CITÉES

**[1]** Z. Zhu et C. Y. Cheng, Hydrometallurgy 2011, 107, 1-12

**[2]** I. M. Gibalo et D. S. Albadri, Vestn. Mosk. Univ., Ser. II. Khim. 1969, 2, 98-101

**[3]** N. I. Kassikova et al., Proceedings of 3rd BMC-2003, Ohrid, Macedonia

**[4]** RU 2 198 844B

**[5]** Rapport de l'Ames Laboratory, Iowa State College, R. A. Foos et H.A. Wilhelm, 1954, 10-18


## Revendications

1. Procédé d'extraction d'au moins un élément métallique choisi parmi le tantale et le niobium d'une phase aqueuse A1 acide, qui comprend au moins une étape comprenant la mise en contact de la phase aqueuse A1 avec une phase organique, puis la séparation de la phase aqueuse A1 de la phase organique, et qui est **caractérisé en ce que** la phase organique comprend une (alkyl en $C_1$ à $C_4$)-acétophénone en tant qu'extractant.

2. Procédé d'extraction selon la revendication 1, **caractérisé en ce que** l'(alkyl en $C_1$ à $C_4$)-acétophénone est une méthylacétophénone, et de préférence la 4-méthylacétophénone.

3. Procédé d'extraction selon la revendication 1 ou la revendication 2, **caractérisé en ce que** l'(alkyl en $C_1$ à $C_4$)-acétophénone représente au moins 50% en masse de la masse de la phase organique, et de préférence 100% en masse de la masse de la phase

organique.

4. Procédé d'extraction selon l'une quelconque des revendications 1 à 3, **caractérisé en ce que** la phase aqueuse A1 comprend un premier et un deuxième acide minéral fort, le premier acide minéral fort étant l'acide fluorhydrique.

5. Procédé d'extraction selon la revendication 4, **caractérisé en ce que** le deuxième acide minéral fort est l'acide sulfurique, l'acide nitrique, l'acide phosphorique ou l'acide chlorhydrique.

6. Procédé d'extraction selon la revendication 4 ou la revendication 5, **caractérisé en ce que** la phase aqueuse A1 a une concentration en acide fluorhydrique inférieure à sa concentration en deuxième acide minéral fort.

7. Procédé d'extraction selon l'une quelconque des revendications 4 à 6, **caractérisé en ce que** la phase aqueuse A1 a une concentration en acide fluorhydrique allant de 0,5 mol/L à 1,5 mol/L et une concentration en deuxième acide minéral fort allant de 1 mol/L à 9 mol/L.

8. Procédé d'extraction selon l'une quelconque des revendications 4 à 7, **caractérisé en ce que** :

soit la phase aqueuse A1 comprend du tantale mais ne comprend pas de niobium et la phase aqueuse A1 a une concentration totale en acides allant de 3,5 mol/L à 9,5 mol/L, moyennant quoi le tantale est extrait de la phase aqueuse A1 ;
soit la phase aqueuse A1 comprend du niobium mais ne comprend pas de tantale et la phase aqueuse A1 a une concentration totale en acides allant de 5 mol/L à 9,5 mol/L, moyennant quoi le niobium est extrait de la phase aqueuse A1 ;
soit la phase aqueuse A1 comprend du tantale et du niobium et la phase aqueuse A1 a une concentration totale en acides allant de 5 mol/L à 9,5 mol/L, moyennant quoi le tantale et le niobium sont co-extraits de la phase aqueuse A1.

9. Procédé d'extraction selon l'une quelconque des revendications 4 à 8, **caractérisé en ce que** la phase aqueuse A1 comprend du tantale et du niobium et **en ce que** le procédé comprend successivement et dans cet ordre :

- une première étape comprenant la mise en contact de la phase aqueuse A1 avec une première phase organique comprenant l'(alkyl en $C_1$ à $C_4$)-acétophénone, la phase aqueuse A1 ayant une concentration totale en acides allant de 1,5 mol/L à 3,5 mol/L, puis la séparation de la phase aqueuse A1 de la première phase organique, moyennant quoi le tantale est sélectivement extrait de la phase aqueuse A1 ; et
- une deuxième étape comprenant la mise en contact de la phase aqueuse A1 avec une deuxième phase organique comprenant l'(alkyl en $C_1$ à $C_4$)-acétophénone, la phase aqueuse A1 ayant une concentration totale en acides allant de 5 mol/L à 9,5 mol/L, puis la séparation de la phase aqueuse A1 de la deuxième phase organique, moyennant quoi le niobium est extrait de la phase aqueuse A1.

10. Procédé d'extraction selon l'une quelconque des revendications 4 à 9, **caractérisé en ce que** le deuxième acide minéral fort est l'acide sulfurique.

11. Procédé de récupération d'au moins un élément métallique choisi parmi le tantale et le niobium à partir d'une phase aqueuse A1 acide, **caractérisé en ce qu'**il comprend :

a) l'extraction dudit au moins un élément métallique de la phase aqueuse A1 par un procédé d'extraction selon l'une quelconque des revendications 1 à 10 ; et
b) la désextraction dudit au moins un élément métallique de la phase organique obtenue à l'issue de a).

12. Procédé de récupération selon la revendication 11, **caractérisé en ce que** la phase organique obtenue à l'issue de a) comprend du tantale mais ne comprend pas de niobium et **en ce que** b) comprend la mise en contact de la phase organique obtenue à l'issue de a) avec une phase aqueuse, puis la séparation de la phase organique de la phase aqueuse, moyennant quoi le tantale est désextrait de la phase organique.

13. Procédé de récupération selon la revendication 12, **caractérisé en ce que** la phase organique obtenue à l'issue de a) comprend du niobium mais ne comprend pas de tantale et **en ce que** b) comprend la mise en contact de la phase organique obtenue à l'issue de a) avec une phase aqueuse, puis la séparation de la phase organique de la phase aqueuse, moyennant quoi le niobium est désextrait de la phase organique.

14. Procédé de récupération selon la revendication 13, **caractérisé en ce que** la phase organique obtenue à l'issue de a) comprend du tantale et du niobium et **en ce que** b) comprend successivement et dans cet ordre :

- la désextraction du niobium de la phase organique, laquelle désextraction comprend la mise en contact de la phase organique avec une phase aqueuse A2, puis la séparation de la phase organique de la phase aqueuse A2 ; et
- la désextraction du tantale de la phase organique, laquelle désextraction comprend la mise en contact de la phase organique avec une phase aqueuse A3, puis la séparation de la phase organique de la phase aqueuse A3.

**15.** Procédé d'extraction selon l'une quelconque des revendications 1 à 10 ou procédé de récupération selon l'une quelconque des revendications 11 à 14, **caractérisé en ce que** la phase aqueuse acide A1 est une solution d'attaque acide d'un concentré d'un minerai naturel ou urbain comprenant du tantale et/ou du niobium, et de préférence une solution d'attaque aux acides fluorhydrique et sulfurique.

**Patentansprüche**

**1.** Verfahren zur Extraktion von zumindest einem metallischen Element, ausgewählt aus Tantal und Niob, aus einer sauren wässrigen Phase A1, das zumindest einen Schritt umfasst, der das Inkontaktbringen der wässrigen Phase A1 mit einer organischen Phase, dann das Trennen der wässrigen Phase A1 von der organischen Phase umfasst, **dadurch gekennzeichnet, dass** die organische Phase ein $C_1$-$C_4$-Alkyl-Acetophenon als Extraktionsmittel enthält.

**2.** Extraktionsverfahren nach Anspruch 1, **dadurch gekennzeichnet, dass** das $C_1$-$C_4$-Alkyl-Acetophenon ein Methylacetophenon, vorzugsweise das 4-Methylacetophenon, ist.

**3.** Extraktionsverfahren nach Anspruch 1 oder Anspruch 2, **dadurch gekennzeichnet, dass** das $C_1$-$C_4$-Alkyl-Acetophenon zumindest 50 Masse-% der Masse der organischen Phase, vorzugsweise 100 Masse-% der Masse der organischen Phase, darstellt.

**4.** Extraktionsverfahren nach einem der Ansprüche 1 bis 3, **dadurch gekennzeichnet, dass** die wässrige Phase A1 eine erste und eine zweite starke Mineralsäure enthält, wobei die erste starke Mineralsäure Fluorwasserstoffsäure ist.

**5.** Extraktionsverfahren nach Anspruch 4, **dadurch gekennzeichnet, dass** die zweite starke Mineralsäure Schwefelsäure, Salpetersäure, Phosphorsäure, oder Salzsäure ist.

**6.** Extraktionsverfahren nach Anspruch 4 oder Anspruch 5, **dadurch gekennzeichnet, dass** die wässrige Phase A1 eine Fluorwasserstoffsäurekonzentration hat, die geringer ist als ihre Konzentration an zweiter starker Mineralsäure.

**7.** Extraktionsverfahren nach einem der Ansprüche 4 bis 6, **dadurch gekennzeichnet, dass** die wässrige Phase A1 eine Fluorwasserstoffsäurekonzentration von 0,5 mol/L bis 1,5 mol/L und eine Konzentration an zweiter starker Mineralsäure von 1 mol/L bis 9 mol/L hat.

**8.** Extraktionsverfahren nach einem der Ansprüche 4 bis 7, **dadurch gekennzeichnet, dass**
entweder die wässrige Phase A1 Tantal, aber kein Niob enthält und die wässrige Phase A1 eine Gesamtkonzentration an Säuren von 3,5 mol/L bis 9,5 mol/L hat, wodurch das Tantal aus der wässrigen Phase A1 extrahiert wird;
oder die wässrige Phase A1 Niob, aber kein Tantal enthält und die wässrige Phase A1 eine Gesamtkonzentration an Säuren von 5 mol/L bis 9,5 mol/L hat, wodurch das Niob aus der wässrigen Phase A1 extrahiert wird;
oder aber die wässrige Phase A1 Tantal und Niob enthält und die wässrige Phase A1 eine Gesamtkonzentration an Säuren von 5 mol/L bis 9,5 mol/L hat, wodurch das Tantal und das Niob aus der wässrigen Phase A1 co-extrahiert werden.

**9.** Extraktionsverfahren nach einem der Ansprüche 4 bis 8, **dadurch gekennzeichnet, dass** die wässrige Phase A1 Tantal und Niob enthält und dass das Verfahren nacheinander in dieser Reihenfolge umfasst:

- einen ersten Schritt, der das Inkontaktbringen der wässrigen Phase A1 mit einer ersten organischen Phase, die das $C_1$-$C_4$-Alkyl-Acetophenon enthält, wobei die wässrige Phase A1 eine Gesamtkonzentration an Säuren von 1,5 mol/L bis 3,5 mol/L hat, dann das Trennen der wässrigen Phase A1 von der ersten organischen Phase umfasst, wodurch das Tantal aus der wässrigen Phase A1 selektiv extrahiert wird; und
- einen zweiten Schritt, der das Inkontaktbringen der wässrigen Phase A1 mit einer zweiten organischen Phase, die das $C_1$-$C_4$-Alkyl-Acetophenon enthält, wobei die wässrige Phase A1 eine Gesamtkonzentration an Säuren von 5 mol/L bis 9,5 mol/L hat, dann das Trennen der wässrigen Phase A1 von der zweiten organischen Phase umfasst, wodurch das Niob aus der wässrigen Phase A1 extrahiert wird.

**10.** Extraktionsverfahren nach einem der Ansprüche 4 bis 9, **dadurch gekennzeichnet, dass** die zweite starke Mineralsäure Schwefelsäure ist.

**11.** Verfahren zum Gewinnen von zumindest einem metallischen Element, ausgewählt aus Tantal und Niob,

aus einer sauren wässrigen Phase A1, **dadurch gekennzeichnet, dass** es umfasst:

a) Extraktion des zumindest einen metallischen Elements aus der wässrigen Phase A1 durch ein Extraktionsverfahren nach einem der Ansprüche 1 bis 10; und
b) Reextraktion des zumindest einen metallischen Elements aus der aus a) erhaltenen organischen Phase.

**12.** Gewinnungsverfahren nach Anspruch 11, **dadurch gekennzeichnet, dass** die aus a) erhaltene organische Phase Tantal, aber kein Niob enthält und dass b) das Inkontaktbringen der aus a) erhaltenen organischen Phase mit einer wässrigen Phase, dann das Trennen der organischen Phase von der wässrigen Phase umfasst, wodurch das Tantal aus der organischen Phase reextrahiert wird.

**13.** Gewinnungsverfahren nach Anspruch 12, **dadurch gekennzeichnet, dass** die aus a) erhaltene organische Phase Niob, aber kein Tantal enthält und dass b) das Inkontaktbringen der aus a) erhaltenen organischen Phase mit einer wässrigen Phase, dann das Trennen der organischen Phase von der wässrigen Phase umfasst, wodurch das Niob aus der organischen Phase reextrahiert wird.

**14.** Gewinnungsverfahren nach Anspruch 13, **dadurch gekennzeichnet, dass** die aus a) erhaltene organische Phase Tantal und Niob enthält und dass b) nacheinander in dieser Reihenfolge umfasst:

- Reextraktion von Niob aus der organischen Phase, wobei die Reextraktion das Inkontaktbringen der organischen Phase mit einer wässrigen Phase A2, dann das Trennen der organischen Phase von der wässrigen Phase A2 umfasst; und
- Reextraktion von Tantal aus der organischen Phase, wobei die Reextraktion das Inkontaktbringen der organischen Phase mit einer wässrigen Phase A3, dann das Trennen der organischen Phase von der wässrigen Phase A3 umfasst.

**15.** Extraktionsverfahren nach einem der Ansprüche 1 bis 10 oder Gewinnungsverfahren nach einem der Ansprüche 11 bis 14, **dadurch gekennzeichnet, dass** die saure wässrige Phase A1 eine Säureätzlösung eines Konzentrats aus natürlichem oder urbanem Erz ist, das Tantal und/oder Niob enthält, und vorzugsweise eine Ätzlösung aus Fluorwasserstoff- und Schwefelsäure.

**Claims**

**1.** Method for extracting at least one metal element chosen from tantalum and niobium from an acid aqueous phase A1, which comprises at least one step comprising putting the aqueous phase A1 in contact with an organic phase, and then separating the aqueous phase A1 from the organic phase, and which is **characterised in that** the organic phase comprises a ($C_1$ to $C_4$ alkyl)-acetophenone as an extractant.

**2.** Extraction method according to claim 1, **characterised in that** the ($C_1$ to $C_4$ alkyl)-acetophenone is a methylacetophenone, and preferably 4-methylacetophenone.

**3.** Extraction method according to claim 1 or claim 2, **characterised in that** the ($C_1$ to $C_4$ alkyl)-acetophenone represents at least 50% by weight of the weight of the organic phase, and preferably 100% by weight of the weight of the organic phase.

**4.** Extraction method according to any one of claims 1 to 3, **characterised in that** the aqueous phase A1 comprises a first and a second strong inorganic acid, the first strong inorganic acid being hydrofluoric acid.

**5.** Extraction method according to claim 4, **characterised in that** the second strong inorganic acid is sulfuric acid, nitric acid, phosphoric acid or hydrochloric acid.

**6.** Extraction method according to claim 4 or claim 5, **characterised in that** the aqueous phase A1 has a concentration of hydrofluoric acid that is less than its concentration of second strong inorganic acid.

**7.** Extraction method according to any one of claims 4 to 6, **characterised in that** the aqueous phase A1 has a concentration of hydrofluoric acid ranging from 0.5 mol/L to 1.5 mol/L and a concentration of second strong inorganic acid ranging from 1 mol/L to 9 mol/L.

**8.** Extraction method according to any one of claims 4 to 7, **characterised in that**:

either the aqueous phase A1 comprises tantalum but does not comprise niobium and the aqueous phase A1 has a total concentration of acids ranging from 3.5 mol/L to 9.5 mol/L, whereby the tantalum is extracted from the aqueous phase A1;
or the aqueous phase A1 comprises niobium but does not comprise tantalum and the aqueous phase A1 has a total concentration of acids ranging from 5 mol/L to 9.5 mol/L, whereby the niobium is extracted from the aqueous phase A1;
or the aqueous phase A1 comprises tantalum

and niobium and the aqueous phase A1 has a total concentration of acids ranging from 5 mol/L to 9.5 mol/L, whereby the tantalum and the niobium are co-extracted from the aqueous phase A1.

**9.** Extraction method according to any one of claims 4 to 8, **characterised in that** the aqueous phase A1 comprises tantalum and niobium and **in that** the method successively comprises, in this order:

- a first step comprising putting the aqueous phase A1 in contact with a first organic phase comprising the ($C_1$ to $C_4$ alkyl)-acetophenone, the aqueous phase A1 having a total concentration of acids ranging from 1.5 mol/L to 3.5 mol/L, and then separating the aqueous phase A1 from the first organic phase, whereby the tantalum is selectively extracted from the aqueous phase A1; and
- a second step comprising putting the aqueous phase A1 in contact with a second organic phase comprising the ($C_1$ to $C_4$ alkyl)-acetophenone, the aqueous phase A1 having a total concentration of acids ranging from 5 mol/L to 9.5 mol/L, and then separating the aqueous phase A1 from the second organic phase, whereby the niobium is selectively extracted from the aqueous phase A1.

**10.** Extraction method according to any one of claims 4 to 9, **characterised in that** the second strong inorganic acid is sulfuric acid.

**11.** Method for recovering at least one metal element chosen from tantalum and niobium from an acid aqueous phase A1, **characterised in that** it comprises:

a) extracting said at least one metal element from the aqueous phase A1 via an extraction method according to any one of claims 1 to 10; and
b) stripping said at least one metal element from the organic phase obtained after a).

**12.** Recovery method according to claim 11, **characterised in that** the organic phase obtained after a) comprises tantalum but does not comprise niobium and **in that** b) comprises putting the organic phase obtained after a) in contact with an aqueous phase, and then separating the organic phase from the aqueous phase, whereby the tantalum is stripped from the organic phase.

**13.** Recovery method according to claim 12, **characterised in that** the organic phase obtained after a) comprises niobium but does not comprise tantalum and **in that** b) comprises putting the organic phase obtained after a) in contact with an aqueous phase, and then separating the organic phase from the aqueous phase, whereby the niobium is stripped from the organic phase.

**14.** Recovery method according to claim 13, **characterised in that** the organic phase obtained after a) comprises tantalum and niobium and **in that** b) successively comprises, in this order:

- stripping the niobium from the organic phase, which stripping comprises putting the organic phase in contact with an aqueous phase A2, and then separating the organic phase from the aqueous phase A2; and
- stripping the tantalum from the organic phase, which stripping comprises putting the organic phase in contact with an aqueous phase A3, and then separating the organic phase from the aqueous phase A3.

**15.** Extraction method according to any one of claims 1 to 10 or recovery method according to any one of claims 11 to 14, **characterised in that** the acid aqueous phase A1 is a solution of acid attack of a concentrate of a natural or urban ore comprising tantalum and/or niobium, and preferably a solution of attack with hydrofluoric and sulfuric acids.

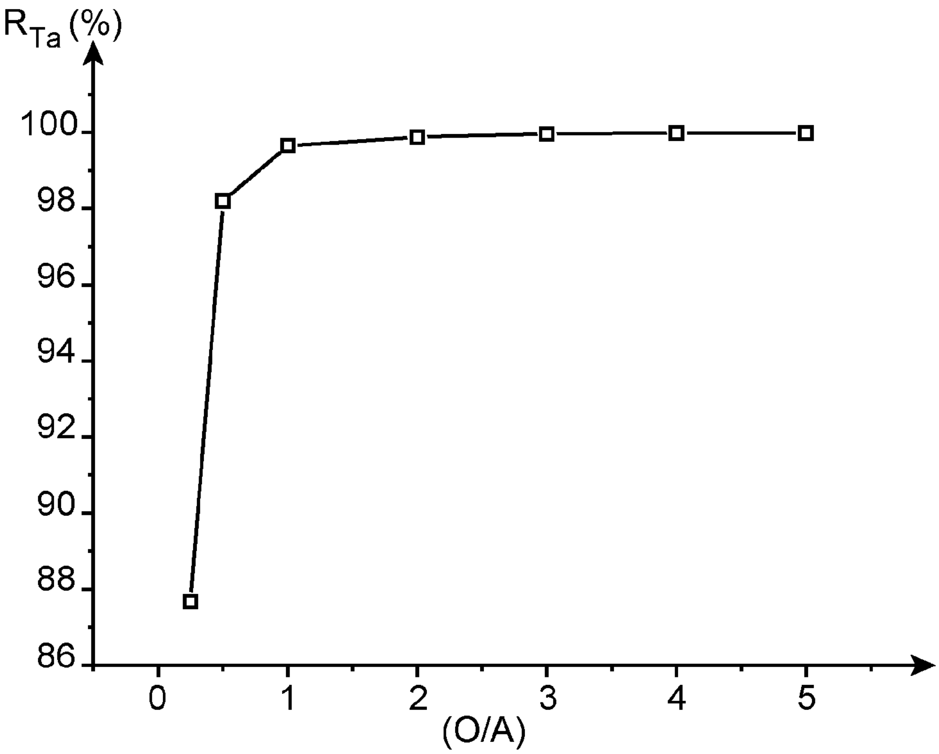

R Ta (%)
100
98
96
94
92
90
88
86
0
1
2
3
4
5
(O/A)


FIG. 1

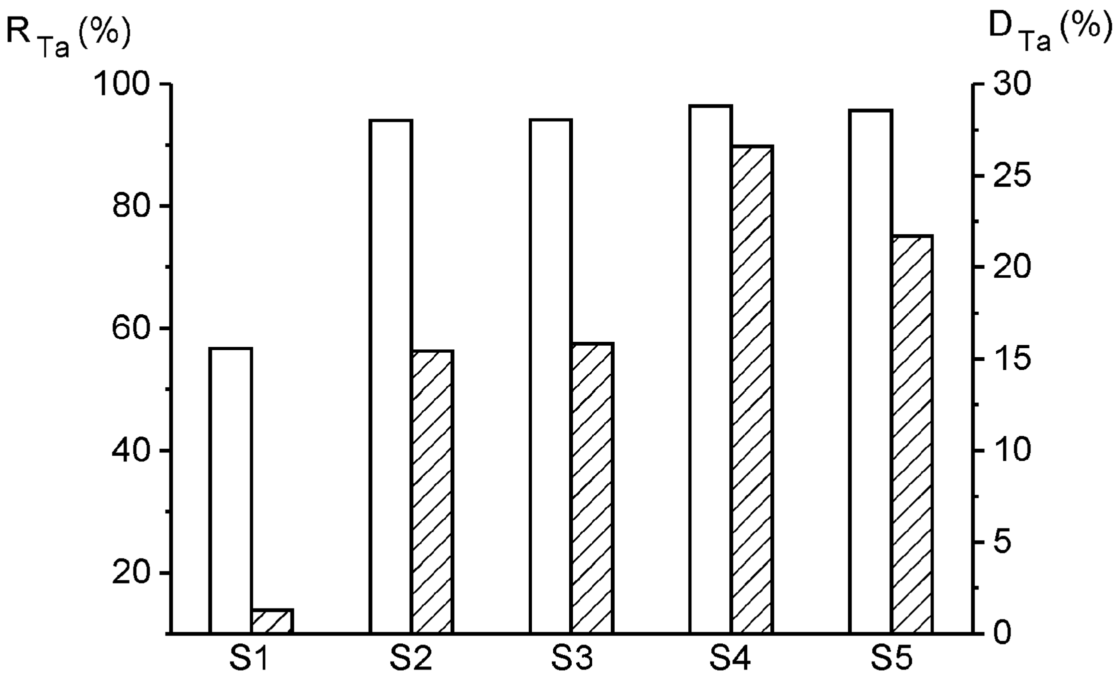

R Ta (%)
D Ta (%)
100
80
60
40
20
30
25
20
15
10
5
0
S1
S2
S3
S4
S5


FIG. 2

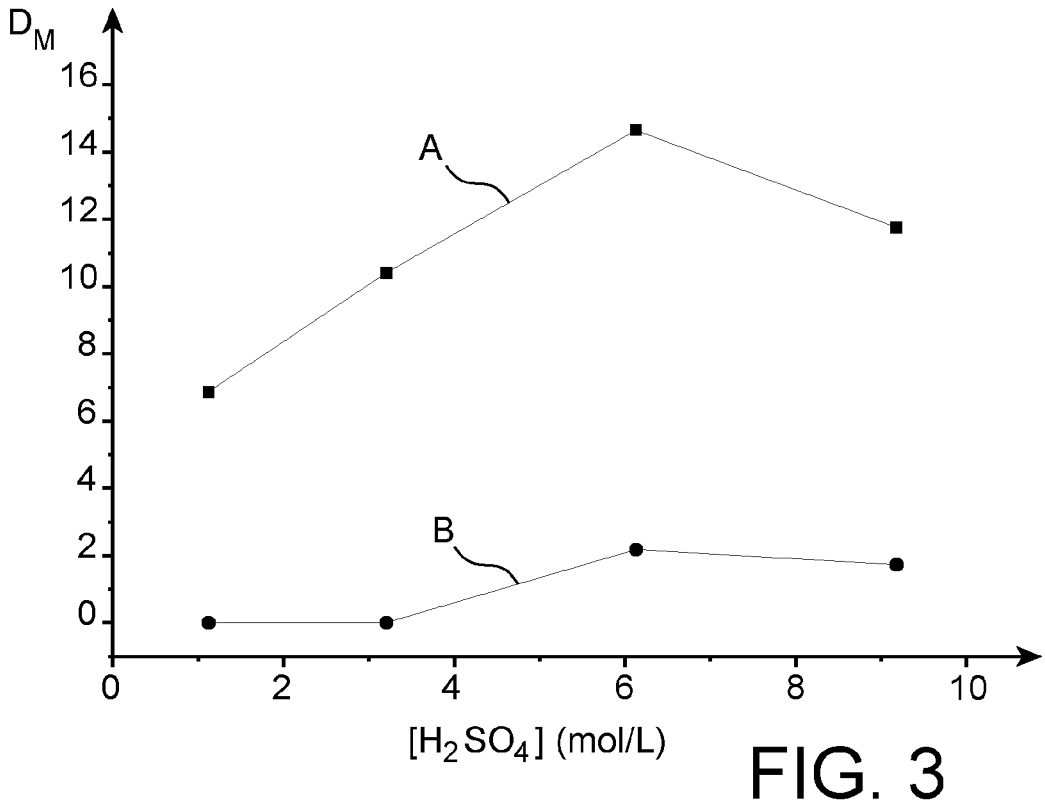
$D_M$
16
14
12
10
8
6
4
2
0
A
B
0
2
4
6
8
10
$[H_2SO_4]$ (mol/L)

FIG. 3

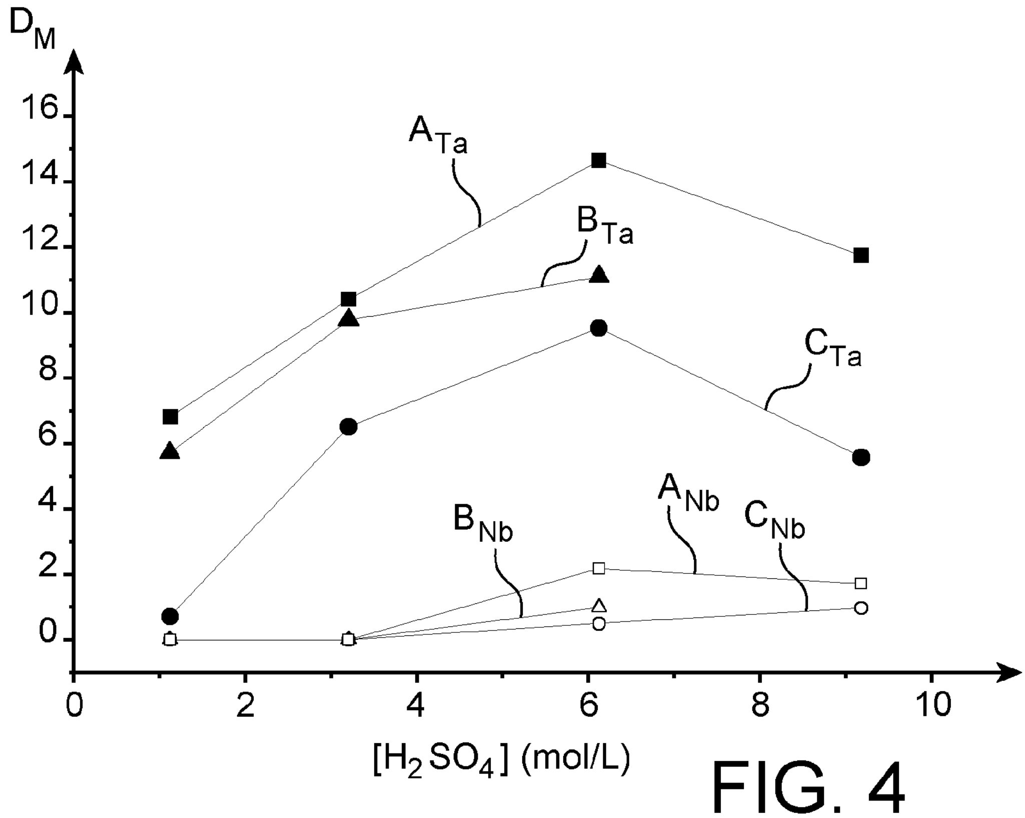
$D_M$
16
14
12
10
8
6
4
2
0
$A_{Ta}$
$B_{Ta}$
$C_{Ta}$
$B_{Nb}$
$A_{Nb}$
$C_{Nb}$
0
2
4
6
8
10
$[H_2SO_4]$ (mol/L)

FIG. 4

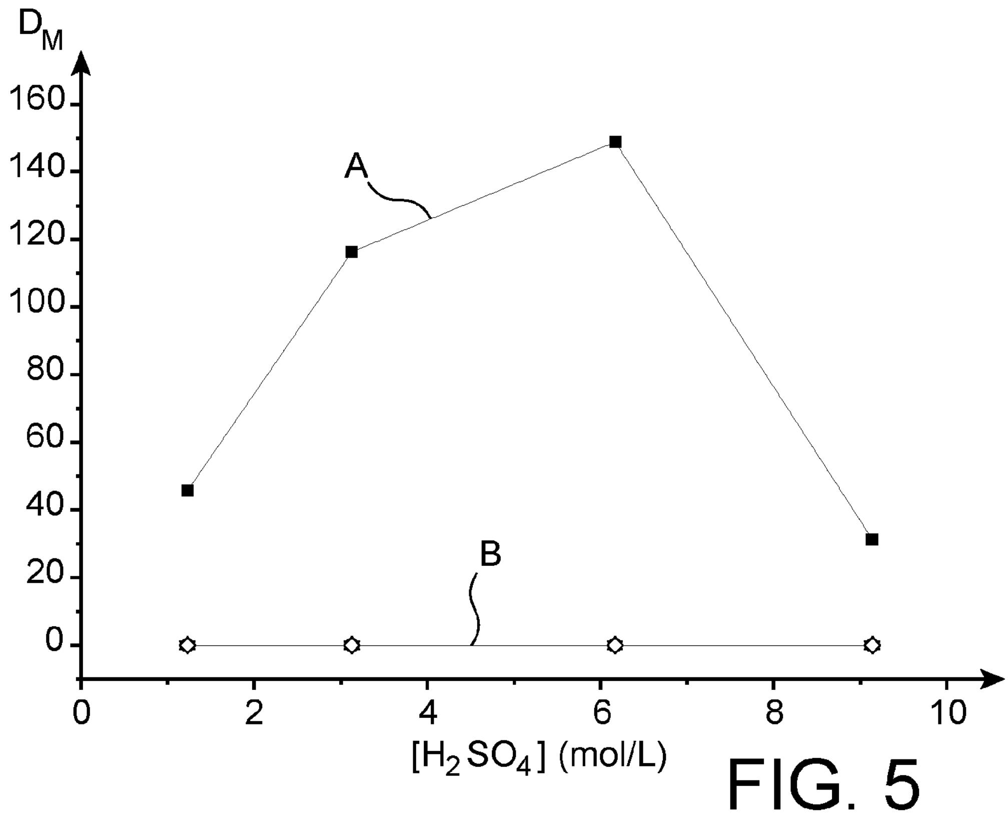
D_M
160
140
120
100
80
60
40
20
0
A
B
0
2
4
6
8
10
[H2 SO4] (mol/L)

FIG. 5

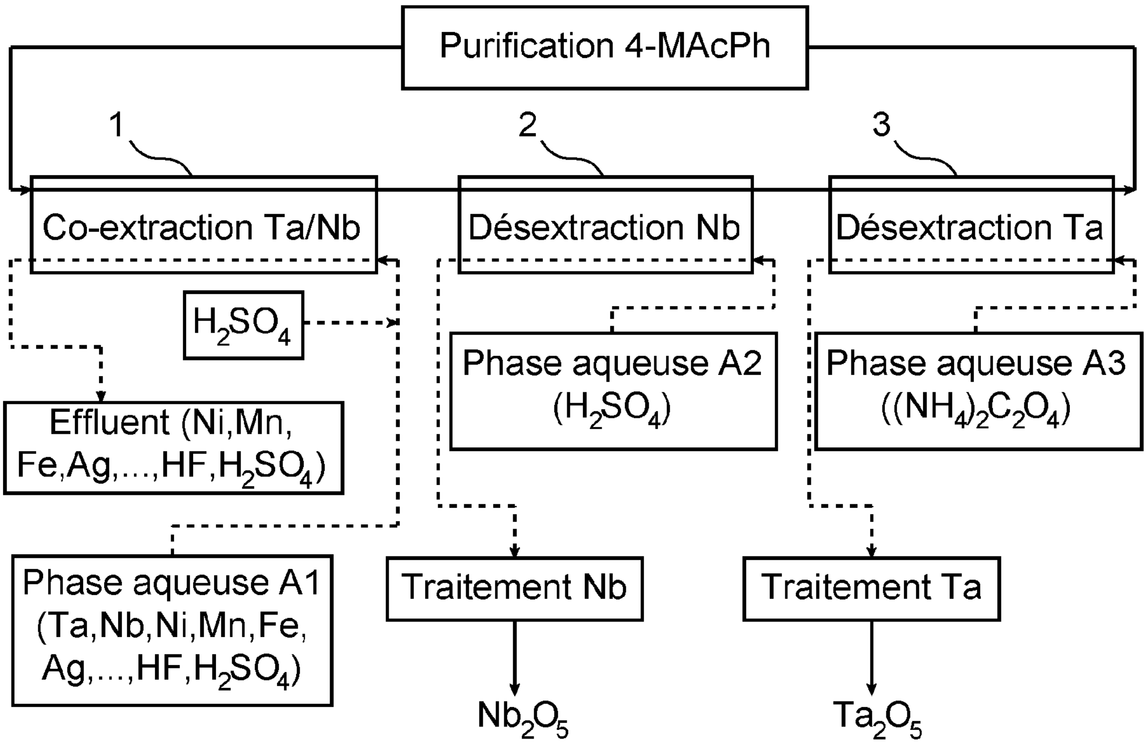
Purification 4-MAcPh
1
2
3
Co-extraction Ta/Nb
Désextraction Nb
Désextraction Ta
H2SO4
Phase aqueuse A2 (H2SO4)
Phase aqueuse A3 ((NH4)2C2O4)
Effluent (Ni,Mn, Fe,Ag,...,HF,H2SO4)
Phase aqueuse A1 (Ta,Nb,Ni,Mn,Fe, Ag,...,HF,H2SO4)
Traitement Nb
Traitement Ta
Nb2O5
Ta2O5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- RU 2198844 B


### Littérature non-brevet citée dans la description


- **Z. ZHU ; C. Y. CHENG.** *Hydrometallurgy,* 2011, vol. 107, 1-12
- **Z. ZHU ; C. Y. CHENG.** *Hydrometallurgy,* vol. 2011 (107), 1-12
- **I. M. GIBALO ; D. S. ALBADRI.** Ser. II. Khim. *Vestn. Mosk. Univ.,* 1969, vol. 2, 98-101
- **N. I. KASSIKOVA et al.** *Proceedings of 3rd BMC-2003*
- **R. A. FOOS ; H.A. WILHELM.** Rapport de l'Ames Laboratory. Iowa State College, 1954, 10-18